# EUROPEAN PATENT SPECIFICATION

(11) **EP 3 255 099 B1**
(45) Date of publication and mention of the grant of the patent: **19.12.2018**
(21) Application number: 16746703.4
(22) Date of filing: 04.02.2016
(51) Int. Cl.: C08L 23/12, B60C 1/00, B60C 5/01

(54) **TIRE**
REIFEN
PNEUMATIQUE

(30) Priority: 04.02.2015 JP 2015020548
(43) Date of publication of application: 13.12.2017
(73) Proprietor: Bridgestone Corporation, Tokyo 104-8340 (JP)
(72) Inventor: KYO, Soichi, Tokyo 104-8340 (JP); FUDEMOTO, Hiroyuki, Tokyo 104-8340 (JP); HONJO, Atsuko, Tokyo 104-8340 (JP)
(74) Representative: Oxley, Robin John George
(86) International application number: PCT/JP2016/053426
(87) International publication number: WO 2016/125872

(56) References cited:
- WO-A1-2014/133105
- JP-A- S 591 550
- JP-A- S57 151 402
- JP-A- 2011 168 740
- JP-A- 2011 168 740
- JP-A- 2012 219 246
- JP-A- 2014 501 308

## Description

### BACKGROUND OF THE INVENTION

### [Technical Field]

The present invention relates to a tire to be fitted to a rim and, in particular, to a tire in which at least a portion of a tire frame (tire case) includes a resinous material.

### [Background Art]

Conventionally, pneumatic tires constructed from rubber, organic fiber materials, steel members, and the like have been used in vehicles such as passenger cars. Regarding general rubber materials that are used for conventional pneumatic tires, there are no problems in terms of heat resistance and the like. However, the process for manufacturing a tire usually includes plural steps, for example, kneading, sheeting, molding, and vulcanization, and therefore, improvement in productivity has been required.

In regard to the above, recently, from the viewpoints of weight reduction, ease of molding, and ease of recycling, research has been conducted on the use of resinous materials as the tire material; in particular, thermoplastic resins, thermoplastic elastomers, and the like. These thermoplastic polymer materials (thermoplastic resinous materials) have a lot of advantages from the viewpoint of improvement in productivity, such as by enabling injection molding.

Further, a tire in which a polyolefin-based thermoplastic elastomer is used as the thermoplastic polymer material has been proposed in JP-A No. 2012-046031.

### SUMMARY OF INVENTION

### [Technical Problem]

Tires, in which a thermoplastic resinous material is used, are easily produced and are inexpensive, compared with conventional tires made of rubber. On the other hand, when a tire is manufactured by using a resinous material, it is required to exhibit performance which is comparable to that of a conventional rubber tire together with realizing the high productivity and the low cost.

Specifically, a tire in which a thermoplastic polymer material is used is requested to ensure excellent fittability onto a rim such that the tire can be fitted onto a rim and such that the air in the inner part does not leak when the tire is fitted onto a rim. A property to suppress deformation of the tire itself at the time of traveling (resistance to deformation during traveling) is also requested thereto.

However, it was found that it is not easy to achieve both the fittability onto a rim and the resistance to deformation during traveling in a case in which polypropylene, which is specifically advantageous among resinous materials in terms of cost reduction, is used for forming a tire.

The invention has been made based on the above circumstances, and an object of the invention is to provide a tire which is formed using a resinous material including polypropylene and has excellent fittability onto a rim as well as excellent resistance to deformation during traveling.

### [Solution to Problem]

[1] A tire, comprising a circular tire frame comprising a resinous material, the resinous material comprising at least polypropylene and having a pentad ratio of from 88.2% to 93.4%.

### [Advantageous Effects of Invention]

According to the invention, a tire may be provided which is formed using a resinous material and has excellent fittability onto a rim as well as excellent resistance to deformation during traveling.

### BRIEF DESCRIPTION OF DRAWINGS

Fig. 1A is a perspective view illustrating a partial cross-section of a tire according to an embodiment of the invention.
Fig. 1B is a cross-sectional view illustrating a bead portion fitted onto a rim in a tire according to an embodiment of the invention.
Fig. 2 is a cross-sectional view taken along a tire rotation axis, which illustrates a state where a reinforcing cord is embedded in a crown portion of a tire case of the tire according to the first embodiment of the invention.
Fig. 3 is a diagram illustrating an operation of embedding the reinforcing cord in the crown portion of the tire case by the use of a cord heating apparatus and rollers.

### DESCRIPTION OF EMBODIMENTS

The tire of the invention has a circular tire frame including a resinous material, namely, formed by using at least a resinous material. The resinous material includes at least polypropylene, and a pentad ratio of the resinous material is from 88.2% to 93.4%.

The term "polypropylene" as used herein refers to homopolypropylene or random polypropylene, that is, a homopolymer of propylene or a copolymer of propylene and another monomer. A homopolypropylene is herein defined as a polymer in which the proportion of propylene in monomers synthesized to form the polymer is 98% by mol or more, and a random polypropylene is herein defined as a polymer in which the proportion of propylene in monomers synthesized to form the polymer is less than 98% by mol.

Research has been conducted recently on the use of resinous materials as the tire material due to advantages in the high productivity and the low cost. Specifically, a tire which uses polypropylene as a material that may achieve the low cost has been tested.

As described above, a tire in which a resinous material is used is requested to exhibit performance which is comparable to that of a conventional rubber tire, such as an excellent fittability onto a rim such that leakage of internal air at the time of rim fitting is inhibited. Further, a non-deforming property during traveling (deformation resistance during traveling) is requested, since occurrence of deformation in a tire frame itself when a load is continuously applied thereto by way of travelling means inferior running property, and leakage of internal air may occur when the deformation further progresses.

However, it was turned out that it is not easy to attain deformation resistance during traveling of a tire containing polypropylene when the tire is directed to attain the fittability onto a rim.

In contrast, in the invention, the resinous material forming the tire frame includes at least polypropylene, and the pentad ratio of the resinous material is controlled within the above-described range. It is considered that the creep property of the tire frame can be reduced while obtaining an appropriate tensile elastic modulus as a tire frame when the pentad ratio of the resinous material is in the above-described range.

When the elastic modulus is in an appropriate range, excellent fittability onto a rim can be obtained, and as a result, the rim fitting is performed satisfactorily, which leads to suppression of internal air leakage.

It is considered that reduction of the creep property suppresses deformation of the tire frame itself, particularly deformation of a side of a tire, even when a load is continuously applied to the tire by traveling, and deformation resistance during traveling becomes excellent. Since a deformation of a tire frame itself is suppressed, leakage of air which may have occurred with such a deformation is suppressed.

### - Pentad Ratio -

The resinous material in the invention has a pentad ratio of from 88.2% to 93.4%. When the pentad ratio exceeds the upper limit, the tensile elastic modulus of the tire frame cannot be controlled to be in an appropriate range, and as a result, the rim fitting cannot be performed favorably and internal air leakage also occurs. On the other hand, when the pentad ratio is less than the lower limit value, the creep property of the tire frame cannot be reduced, and as a result, deformation resistance during traveling cannot be obtained. When the deformation of a tire frame itself progresses further, internal air leakage occurs.

The pentad ratio is preferably from 88.2% to 91.7%, and more preferably from 88.2% to 89.0%.

The pentad ratio will now be described. In polypropylene, a quaternary carbon formed in a main chain by polymerization is an asymmetric carbon atom. Therefore, the arrangement of a side chain methyl group (-CH₃) bonded to this asymmetric carbon atom has orientation, and stereoregularity occurs depending on whether the side chain methyl groups at adjacent asymmetric carbon atoms are on a same side or different sides. The probability that side chain methyl groups of five consecutive asymmetric carbon atoms (pentad) in a structure of a main chain of polypropylene are on a same side (so called "mmmm structure") is referred to as a pentad ratio.

The pentad ratio of the resinous material in the invention can be measured by the following method.

In ¹³C-NMR, configurations (meso, racemo) of a certain side chain methyl group, methyl groups on both sides thereof (triads), and methyl groups on both sides thereof (pentads) are mutually influenced, and appear as peaks in different chemical shifts. Quantification of each peak was relatively compared using peak height. FT-NMR (600 MHz) manufactured by JEOL Ltd. was used as a measurement device, the measurement conditions were 123°C, a tetrachloroethane heavy solvent was used as a solvent, and as for the peak, the ratio of mmmm was calculated from each peak height of mmmm, mmmr, rmmr, mmrr, mmrm, rmrr, mrmr, rrrr, rrrm, and mrrm.

In the case of random polypropylene (a copolymer of propylene and another monomer), the calculation is performed only from a peak attributable to a polypropylene chain in the main chain.

A method of controlling the pentad ratio of a resinous material within the above-described range is not particularly limited, and a method of adjusting the pentad ratio by mixing two or more kinds of resins is preferable. More specifically, it is preferable to mix polypropylene as a first resin and a second resin different from the first resin.

Here, examples of the resin different from the first resin include: a resin other than polypropylene, that is, a resin polymerized from a monomer other than propylene; and a polypropylene (a homopolypropylene or a random polypropylene) which is a resin different in stereoregularity from the first resin.

As described above, the asymmetric carbon atom of polypropylene in the main chain has a side chain methyl group, and since the arrangement thereof has orientation, stereoregularity appears. Polypropylene having a structure in which side chain methyl groups bonded to this asymmetric carbon atom are regularly and continuously arranged on the same side is called isotactic polypropylene. In the invention, one having a pentad ratio of 94.5% or more is defined as isotactic polypropylene.

On the other hand, polypropylene having a random arrangement of side chain methyl groups and having no regularity is referred to as atactic polypropylene. In the invention, one having a pentad ratio of less than 94.5% is defined as atactic polypropylene.

Therefore, in the invention, for example, when homopolypropylene (isotactic polypropylene) having a pentad ratio of 94.5% or more is used as the first resin, examples of the second resin different from the first resin include: a resin polymerized from a monomer other than propylene; homopolypropylene (atactic polypropylene) having a pentad ratio of less than 94.5%; and random polypropylene having a pentad ratio of less than 94.5%.

### << Resinous material >>

The tire according to the invention has a tire frame including a resinous material (that is, formed using at least a resinous material), and the resinous material includes at least polypropylene.

The resinous material may contain a thermoplastic resin other than polypropylene and other arbitrary components (additives), and a content of polypropylene with respect to the total amount of the resinous material is preferably 80% by mass or more, and more preferably from 90% by mass to 100% by mass.

"Resin" as used herein is a concept including a thermoplastic resin and a thermosetting resin, but not including natural rubber.

### (Polypropylene)

Examples of polypropylene include homopolypropylene (a homopolymer of propylene) and random polypropylene (a copolymer of propylene and another monomer).

Examples of the polypropylene homopolypropylene include polypropylene having different stereoregularity, and specific examples thereof include isotactic polypropylene and atactic polypropylene.

Examples of the random polypropylene include a copolymer of propylene and another monomer. Examples thereof further include those having different pentad ratios in polypropylene chains in the main chain, and specific examples thereof include those having a pentad ratio of 94.5% or more and those having a pentad ratio of less than 94.5%.

Examples of other monomers include ethylene, butene, and octene.

Polypropylene is preferably homopolypropylene, and more preferably isotactic polypropylene, among the above.

Examples of the isotactic polypropylene include PRIME POLYPRO E-105GM, J-700GP, E-200GP, and Y-400GP manufactured by Prime Polymer Co., Ltd., PL400A and PL500A manufactured by SunAllomer Ltd., and NOVATEC (registered trademark) EA9 and MA3 manufactured by Japan Polypropylene Corporation.

Examples of the atactic polypropylene include TAFSELEN (registered trademark) H3002, T1712, and X1102 manufactured by Sumitomo Chemical Co., Ltd. and L-MODU (registered trademark) S400, S600, and S901 manufactured by Idemitsu Kosan Co., Ltd.

A weight average molecular weight of the polypropylene is preferably from 50,000 to 3,000,000, more preferably from 50,000 to 2,500,000, and still more preferably from 800,000 to 2,000,000. When the weight average molecular weight of the polypropylene is within the above range, the resinous material has sufficient mechanical properties and excellent processability.

The weight average molecular weight of the polypropylene can be measured by gel permeation chromatography (GPC), and for example, GPC (gel permeation chromatography) such as "HLC-8321GPC/HT" manufactured by Tosoh Corporation can be used.

The isotactic polypropylene, the atactic polypropylene, and the random polypropylene can be synthesized by copolymerization by a known method.

As described above, from the viewpoint of controlling the pentad ratio of the resinous material within the above-described range, it is preferable to adjust the pentad ratio by mixing two or more resins. More specifically, it is preferable to mix a first resin which is polypropylene and a second resin which is different from the first resin.

As the first resin, homopolypropylene is preferably used, and isotactic polypropylene is particularly preferably used. Examples of the isotactic polypropylene include those described above.

A content of the isotactic polypropylene in the resinous material is preferably in a range of from 50% by mass to 70% by mass, more preferably in a range of from 55% by mass to 65% by mass, and still more preferably in a range of from 55% by mass to 60% by mass.

Also as the second resin, homopolypropylene is preferably used, and atactic polypropylene is particularly preferably used. Examples of the atactic polypropylene include those described above.

A content of the atactic polypropylene in the resinous material is preferably in a range of from 30% by mass to 50% by mass, more preferably in a range of from 35% by mass to 45% by mass, and still more preferably in a range of from 40% by mass to 45% by mass.

In particular, in the resinous material of the invention, it is more preferable to use isotactic polypropylene of homopolypropylene as the first resin, and atactic polypropylene of homopolypropylene as the second resin. In this case, it is preferable that both of the content of the isotactic polypropylene and the content of the atactic polypropyleneare are also in the above-described ranges respectively. When the isotactic polypropylene and the atactic polypropylene are contained in the above-described ranges, the pentad ratio of the resinous material can be more easily controlled within the above-described range.

The second resin is not limited to polypropylene, and other resins described below may be used. Further, the following other resins may be separately used in addition to the first resin and the second resin.

### Additional Resin

The resinous material of the invention may further contain an additional resin which is different from polypropylene. Preferable examples of the additional resin include a thermoplastic resin and a thermoplastic elastomer, examples of which including a polyamide resin, a polyurethane resin, a polyester resin, a polyolefin resin, a polystyrene resin, a thermoplastic polyamide-based elastomer, a thermoplastic polyurethane-based elastomer, a thermoplastic polyester-based elastomer, and a thermoplastic styerene-based elastomer.

### Additive

The resinous material of the invention may further contain one or more of various additives. Examples of the additive include a rubber, a filler (for example, silica, calcium carbonate, or clay), an aging inhibitor, an oil, a plasticizer, a colorant, a weather-proofing agent, or a reinforcing material.

A content of the additives in the resinous material (tire frame) is not particularly limited, and the additives can be appropriately used, as long as the effects of the invention are not impaired. In the case of adding components other than the resin, such as additives, to the resinous material, the content of the resin component in the resinous material is preferably 50% by mass or higher, and more preferably 90% by mass or higher, with respect to the total amount of the resinous material. Here, the content of the resin component in the resinous material indicates the residue obtained by subtracting the total content of the additives from the total amount of the resinous material.

### Physical properties of Resinous material

### Tensile elastic modulus

A tensile elastic modulus in the invention means one that is measured in accordance with JIS K7113:1995.

The tensile elastic modulus of the resinous material is preferably in a range of from 140 MPa to 570 MPa, more preferably in a range of from 160 MPa to 500 MPa, and further preferably in a range of from 180 MPa to 300 MPa. The tensile elastic modulus of 140 MPa or more may enable to favorably maintain a shape of the tire frame. The tensile elastic modulus of 570 MPa or less may enable to favorably perform rim fitting and inhibit internal air leakage.

### Amount of Creep

An amount of creep means one that is measured three hours after starting of a test which accords with JIS K7115:1995 using a JIS No.3 dumbbell specimen under the conditions of 65 mm of a distance between both grips, 40 kN and 90°C.

The amount of creep of the resinous material is preferably 50 mm or smaller, more preferably 30 mm or smaller, still more preferably 5 mm or smaller, and the nearer to 0 mm the amount of creep is the further preferable it is. The amount of creep of 50 mm or smaller enables to suppress deformation of the tire frame itself, particularly deformation of a side of a tire, even when a load is continuously applied to the tire by traveling. As a result thereof, leakage of air which may occur with such a deformation is suppressed

Herein, the tensile elastic modulus and the amount of creep are physical properties of the resinous material, namely, physical properties of a tire frame including the resinous material. Accordingly, when the tire frame includes a resinous material including optional resinous composition in addition to polypropylene or when the tire frame includes a resinous material including an additive, the tensile elastic modulus and the amount of creep indicate physical properties of the resinous material including all such components.

A melting temperature of the resinous material is normally from 80°C to 200°C, and is preferably from approximately 100°C to approximately 200°C from the viewpoint of manufacturability of the tire. When, for example, a tire frame is formed by welding together divided bodies (frame pieces), the bonding section thereof can be heated to a temperature of being equal to or higher than a melting temperature of a resinous material for forming the tire frame by using, as the resinous material, one that has a melting temperature of from 100°C to 200°C in this manner.

By using a resinous material having a melting temperature which is within the above-described range, sufficient strength of bonding of the tire frame pieces together may be achieved even for a frame welded in an ambient temperature range of from 100°C to 200°C. The tire accordingly has excellent durability during traveling, such as puncture resistance and wear resistance. The heating temperature is preferably a temperature that is from 10°C to 150°C higher, and is more preferably a temperature from 10°C to 100°C higher, than the melting temperature (or softening temperature) of the resinous material forming the tire frame pieces.

Tire

### [Embodiment 1]

A tire according to Embodiment 1 of the tire of the invention will be described below with reference to the drawings.

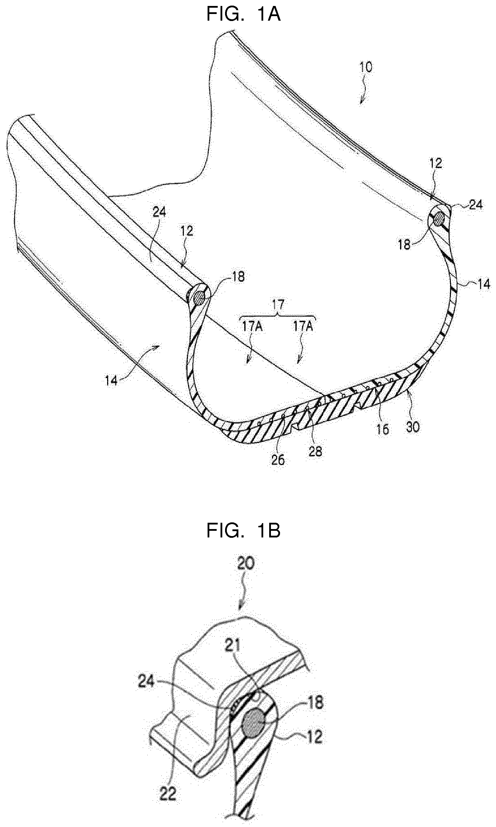

A tire 10 according to this embodiment will be described below. Fig. 1A is a perspective view illustrating a cross-section of a part of a tire according to one embodiment of the invention. Fig. 1B is a cross-sectional view of a bead portion fitted to a rim. As shown in Fig. 1A, the tire 10 according to this embodiment has substantially the same cross-sectional shape as those of conventional general rubber pneumatic tires.

As shown in Fig. 1A, the tire 10 includes a tire case 17 (tire frame) composed of: a pair of bead portions 12 each contacting with a bead seat 21 and a rim flange 22 of a rim 20 shown in Fig. 1B; side portions 14 that extend from the bead portions 12 toward the outer side in the tire radial direction; and a crown portion 16 (outer peripheral portion) that connect the outer end in the tire radial direction of one side portion 14 and the outer end in the tire radial direction of the other side portion 14.

The tire case 17 of the present embodiment may employ, as the resinous material, one that includes at least polypropylene and a pentad ratio of that is from 88.2% to 93.4%.

The tire case 17 of the present embodiment is formed with a single resinous material; however, the configuration of the invention is not limited thereto, and, similarly to ordinary conventional rubber-made pneumatic tires, thermoplastic resinous materials with different characteristics may be employed for each of the sections of the tire case 17 (such as the side portions 14, the crown portion 16 and the bead portions 12). The tire case 17 may be reinforced by a reinforcing material by embedding the reinforcing material (such as fibers, cord, nonwoven fabric, or woven fabric of a polymer material or metal) in the tire case 17 (for example, in the bead portions 12, the side portions 14, the crown portion 16, and the like).

The tire case 17 according to the present embodiment is formed by bonding a pair of tire case half parts (tire frame pieces) 17A including a resinous material to each other. The tire case half parts 17A is formed by placing circular tire case half parts 17A that have the same shape and that are obtained by molding one bead portion 12, one side portion 14, and a half-width of the crown portion 16 as an integral body by injection molding or the like, to face each other, and bonding the half parts to each other at the tire equatorial plane portion. The tire case 17 is not limited to that obtained by bonding two members, and may be formed by bonding three or more members.

Each tire case half part 17A including the resinous material can be molded by, for example, vacuum molding, pressure molding, injection molding, or melt casting. Accordingly, when compared with a conventional case in which the tire case is molded from rubber, it is not necessary to perform vulcanization, as a result of which the production process can remarkably be simplified, and the molding time can be saved.

In the present embodiment, the tire case half parts 17A have a symmetric shape, that is, one tire case half part 17A and the other tire case half part 17A have the same shape; therefore, there is an advantage in that the tire case half parts 17A can be molded using only one type of mold.

In the present embodiment, as shown in Fig. 1B, an annular bead core 18 formed of a steel cord is embedded in each bead portion 12, similarly to conventional general pneumatic tire. However, the invention is not limited to this configuration; the bead core 18 may be omitted as long as the rigidity of the bead portions 12 is ensured and there is no problem in fitting to the rim 20. Other than the steel cord, the bead core may be formed of an organic fiber cord, a resin-coated organic fiber cord, a hard resin, or the like.

In the present embodiment, a material having higher sealing properties than those of the resinous material forming a part or an entire of the tire case 17 is provided on a part of the bead portion 12 that contacts the rim 20 or at least on a part of the bead portion 12 that contacts the rim flange 22 of the rim 20. For example, an annular sealing layer 24 consisting of a rubber is provided. The sealing layer 24 may also be provided in a part in which the tire case 17 (the bead portion 12) and the bead seat 21 contact each other. A material softer than the resinous material that forms the tire case 17 may be used as the material having higher sealing properties than those of the resinous material that forms the tire case 17. It is preferable to use, as a rubber usable for the sealing layer 24, the same kind of rubber as a rubber used on the outer surface of a bead portion of a conventional general rubber pneumatic tire. Other thermoplastic resins (thermoplastic elastomers) having higher sealing properties than those of the resinous material may be used. Examples of other thermoplastic resins include resins such as a polyurethane-based resin, a polyolefin-based resin, a polystyrene-based thermoplastic resin, and a polyester resin, and a blend of any of these resins with a rubber or an elastomer. Thermoplastic elastomers can also be used, and examples thereof include a polyester-based thermoplastic elastomer, a polyurethane-based thermoplastic elastomer, a polystyrene-based thermoplastic elastomer, and a polyolefin-based thermoplastic elastomer, and any combination of these elastomers and a blend of any of these elastomers with a rubber.

As shown in Fig. 1, in the crown portion 16, a reinforcing cord 26 having higher rigidity than that of the resinous material forming the tire case 17 is wound in the circumferential direction of the tire case 17. The reinforcing cord 26 is helically wound to form a reinforcing cord layer 28 in a state in which at least a part of the reinforcing cord 26 is embedded in the crown portion 16 in a cross-sectional view taken along the axial direction of the tire case 17. A crown 30 formed of a material, such as rubber, having higher wear resistance than that of the resinous material forming the tire case 17 is disposed on the outer circumference side in the tire radial direction of the reinforcing cord layer 28.

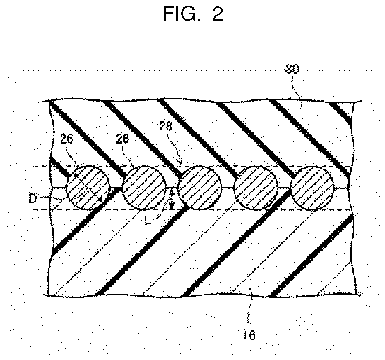

The reinforcing cord layer 28 formed by the reinforcing cord 26 will be described below with reference to Fig. 2. Fig. 2 is a cross-sectional view taken along the tire rotation axis, which illustrates a state in which the reinforcing cord is embedded in the crown portion of the tire case of the tire according to Embodiment 1. As shown in Fig. 2, the reinforcing cord 26 is helically wound in a state in which at least a part of the reinforcing cord 26 is embedded in the crown portion 16 in a cross-sectional view taken along the axial direction of the tire case 17, and, together with a part of the outer circumferential portion of the tire case 17, forms the reinforcing cord layer 28 specified by the dotted lines in Fig. 2. The part of the reinforcing cord 26 that is embedded in the crown portion 16 is in close contact with the resinous material forming the crown portion 16 (the tire case 17). A monofilament (single filament) of a metal fiber, an organic fiber, or the like, or a multifilament (stranded filament) in which fibers are stranded, such as a steel cord composed of steel fibers, may be used as the reinforcing cord 26. In the present embodiment, a steel cord is used as the reinforcing cord 26.

The embedding depth L in Fig. 2 represents the depth of embedding of the reinforcing cord 26 in the tire case 17 (the crown portion 16) in the tire rotation axis direction. The depth of embedding L of the reinforcing cord 26 in the crown portion 16 is preferably equal to or greater than 1/5 of the diameter D of the reinforcing cord 26, and more preferably more than 1/2 of the diameter D of the reinforcing cord 26. It is most preferable that the entire reinforcing cord 26 be embedded in the crown portion 16. When the depth of embedding L of the reinforcing cord 26 is more than 1/2 of the diameter D of the reinforcing cord 26, the reinforcing cord 26 is difficult to drop off from the embedded portion due to the dimensions of the reinforcing cord 26. When the reinforcing cord 26 is entirely embedded in the crown portion 16, the surface (the outer circumferential surface) becomes flat, whereby entry of air into an area around the reinforcing cord can be suppressed even when a member is placed on the crown portion 16 in which the reinforcing cord 26 is embedded. The reinforcing cord layer 28 corresponds to a belt disposed on the outer circumferential surface of a carcass of a conventional rubber pneumatic tire.

As described above, the crown 30 is disposed on the outer circumferential side in the tire radial direction of the reinforcing cord layer 28. It is preferable that the same kind of rubber as that used for conventional rubber pneumatic tires is used as the rubber used for the crown 30. It is also possible to use, instead of the crown 30, a crown formed of another kind of resinous material which has higher wear resistance than that of the resinous material forming the tire case 17. In the crown 30, a crown pattern composed of plural grooves is formed on the contact surface that comes into contact with a road surface, similarly to conventional rubber pneumatic tires.

A method of producing a tire of the invention will be described below.

### (Tire Case (Tire Frame) Forming Step)

First, tire case half parts are formed by using the resinous material of the invention. It is preferable to form the tire case by injection molding. Next, tire case half parts supported by thin metal support rings are arranged to face each other. Subsequently, a mold for bonding, which is not shown in the drawings, is placed so as to contact the outer circumferential surface of a portion at which the tire case half parts are contacted with each other. Here, the mold for bonding is configured to pressurize a region at or around the bonding section (the contact portion) of the tire case half parts 17A with a predetermined pressure. Then, the region at or around the bonding section of the tire case half parts is pressurized at a temperature equal to or higher than the melting temperature (or the softening temperature) of the resinous material that forms the tire case. When the bonding section of the tire case half parts is heated and pressurized by the mold for bonding, the bonding section is melted, and the tire case half parts are fused with each other, as a result of which the members are integrated to form the tire case 17. Although the bonding section of the tire case half parts is heated using the mold for bonding in the present embodiment, the invention is not limited to this configuration. For example, heating of the bonding section may be carried out using, for example, a separately-provided high-frequency heater, or the tire case half parts may be bonded by softening or melting the bonding section, in advance, via application of hot air, irradiation of infrared rays or the like, and pressurizing the bonding section using the mold for bonding.

### (Reinforcing Cord Member Winding Step)

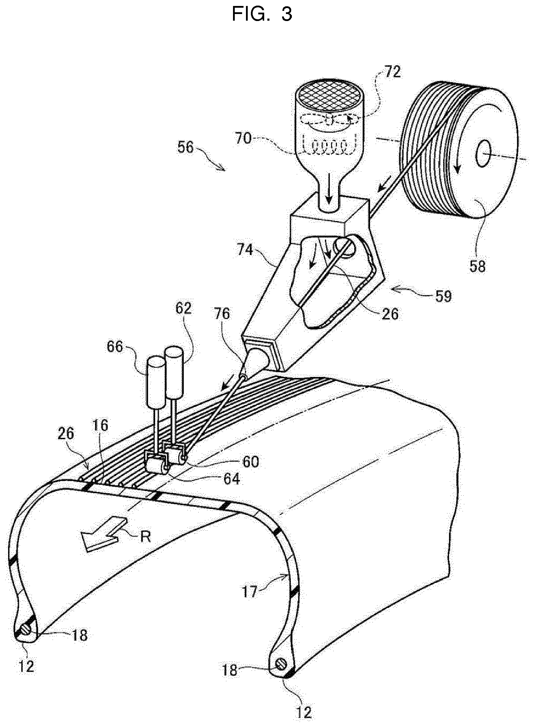

Next, a reinforcing cord winding step will be described below using Fig. 3. Fig. 3 is an explanatory diagram explaining an operation of embedding the reinforcing cord in the crown portion of the tire case using a cord heating device and rollers. In Fig. 3, a cord feeding apparatus 56 includes a reel 58 on which a reinforcing cord 26 is wound, a cord heating device 59 disposed at the downstream side in the cord feeding direction of the reel 58, a first roller 60 disposed at the downstream side in the reinforcing cord 26 feeding direction, a first cylinder unit 62 for moving the first roller 60 in directions in which the first roller comes into contact with and get away from the outer circumferential surface of the tire, a second roller 64 disposed at the downstream side in the reinforcing cord 26 feeding direction of the first roller 60, and a second cylinder unit 66 for moving the second roller 64 in directions in which the first roller comes into contact with and get away from the outer circumferential surface of the tire. The second roller 64 can be used as a cooling roller formed of metal. In the present embodiment, the surface of the first roller 60 or the second roller 64 is coated with a fluororesin (TEFLON (registered trademark) in the present embodiment) with a view to suppressing adhesion of the melted or softened resinous material. Although the cord feeding apparatus 56 is configured to have two rollers of the first roller 60 and the second roller 64 in the present embodiment, the invention is not limited to this configuration, and the cord feeding apparatus may be configured to have only one of these rollers (that is, a single roller).

The cord heating device 59 includes a heater 70 and a fan 72 that generate hot air. The cord heating device 59 includes a heating box 74 into which hot air is supplied and in which the reinforcing cord 26 passes through the inside space thereof, and an discharge port 76 through which the heated reinforcing cord 26 is discharged.

In this step, first, the temperature of the heater 70 of the cord heating device 59 is increased, and the air around the heater 70 heated by the heater 70 is sent to the heating box 74 by an air current generated by the rotation of the fan 72. Then, the reinforcing cord 26 drawn out from the reel 58 is fed to the inside of the heating box 74 of which the inner space is heated with hot air, whereby the reinforcing cord 26 is heated (for example, to increase the temperature of the reinforcing cord 26 to be about 100°C to about 200°C). The heated reinforcing cord 26 passes through the discharge port 76, and is helically wound, with a constant tension, around the outer circumferential surface of the crown portion 16 of the tire case 17 rotating in the direction of arrow R in Fig. 3. Here, as a result of the heated reinforcing cord 26 coming into contact with the outer circumferential surface of the crown portion 16, the resinous material at the contact portion is melted or softened, and at least a part of the heated reinforcing cord 26 is embedded in the outer circumferential surface of the crown portion 16. In this process, since the heated reinforcing cord 26 is embedded in the melted or softened resinous material, the resinous material and the reinforcing cord 26 get into a state in which no space is left between the resinous material and the reinforcing cord 26, that is, in a tightly-contacted state. Accordingly, the incorporation of air into the portion in which the reinforcing cord 26 is embedded is suppressed. By heating the reinforcing cord 26 to a temperature higher than the melting temperature (or the softening temperature) of the resinous material of the tire case 17, the melting or softening of the resinous material in the portion contacting the reinforcing cord 26 is promoted. By employing this configuration, embedding of the reinforcing cord 26 in the outer circumferential surface of the crown portion 16 is facilitated, and the incorporation of air can effectively be suppressed.

The depth L of embedding of the reinforcing cord 26 can be adjusted by the heating temperature for the reinforcing cord 26, the tension applied to the reinforcing cord 26, the pressure applied from the first roller 60, etc. In the present embodiment, the depth L of embedding of the reinforcing cord 26 is set to be equal to or greater than 1/5 of the diameter D of the reinforcing cord 26. The depth L of embedding of the reinforcing cord 26 is more preferably more than 1/2 of the diameter D, and it is still more preferable that the entire reinforcing cord 26 is embedded.

In this way, a reinforcing cord layer 28 is formed on the outer circumference side of the crown portion 16 of the tire case 17 by winding the heated reinforcing cord 26 on the outer circumferential surface of the crown portion 16 such that the heated reinforcing cord 26 is embedded in the outer circumferential surface of the crown portion 16.

A belt-shaped vulcanized crown 30 is wound on the outer circumferential surface of the tire case 17 for one revolution, and the crown 30 is bonded to the outer circumferential surface of the tire case 17 using, for example, an adhesive. For example, precured crown known thus far for use in retreaded tires may be used as the crown 30. This step is a step similar to a step of bonding a precured crown to the outer circumferential surface of a casing of a retreaded tire.

A tire 10 can be completed by bonding a sealing layer 24 formed of a vulcanized rubber to the bead portion 12 of the tire case 17 using, for example, an adhesive.

### (Effects)

In the tire 10 of the present embodiment, since a part or an entire of the tire case 17 includes a resinous material which includes at least polypropylene and a pentad ratio of which is from 88.2 % to 93.4 %, both favorable fittability onto a rim and favorable deformation resistance can be achieved.

Further, the tire 10 has a simpler structure as compared with conventional tires made of rubber, and is hence lighter in weight. Accordingly, the tire 10 of the present embodiment has high friction resistance and high durability. Moreover, since the tire case 17 can be produced by injection molding, the productivity is also extremely excellent.

In addition, in the tire 10 of the embodiment, the reinforcing cord 26 having a higher stiffness than the resinous material is wound in a spiral shape in the circumferential direction on the outer circumferential surface of the crown portion 16 in the tire case 17, a part or an entire of which including the resinous material. Accordingly, the puncture resistance, the cutting resistance and the stiffness of the tire 10 in the circumferential direction are improved. Meanwhile, the improvement of the stiffness of the tire 10 in the circumferential direction prevents the creeping in the tire case 17 including the resinous material.

In a cross-sectional view taken along the axial direction of the tire case 17 (the cross-section shown in Fig. 1), at least a part of the reinforcing cord 26 is embedded in the outer circumferential surface of the crown portion 16 of the tire case 17 including the resinous material, and is in close contact with the resinous material, as a result of which incorporation of air during production is suppressed, and movement of the reinforcing cord 26 due to, for example, a force applied at the time of traveling is suppressed. Accordingly, separation between the reinforcing cord 26, the tire case 17, and the crown 30 is suppressed, and the durability of the tire 10 is improved.

In a case in which the reinforcing cord layer 28 is configured to include the resinous material as described above, the reinforcing cord 26 can be made to more tightly contact the tire case 17 and fixed to the tire case 17 since the difference in hardness between the tire case 17 and the reinforcing cord layer 28 can be made smaller than that in a case in which the reinforcing cord 26 is fixed using a cushion rubber. Accordingly, the incorporation of air mentioned above can effectively be prevented, and the movement of the reinforcing cord member at the time of traveling can effectively be suppressed.

In a case in which the reinforcing cord 26 is a steel cord, the reinforcing cord 26 can easily be separated from the resinous material by heating and recovered at the time of disposing of the tire, and, therefore, there is an advantage from the viewpoint of recyclability of the tire 10. Further, since the resinous material has a lower loss factor (tan δ) compared with vulcanized rubbers, inclusion of a large amount of the resinous material in the reinforcing cord layer 28 makes it possible to enhance the rolling properties of the tire. Compared with vulcanized rubbers, the resinous material has advantages in terms of high in-plane shear stiffness, excellent steering stability at the time of traveling with the tire, and excellent wear resistance.

In addition, since the depth L of embedding of the reinforcing cord 26 is equal to or greater than 1/5 of the diameter D as illustrated in Fig. 2, incorporation of air during manufacturing is effectively suppressed, and the movement of the reinforcing cord 26 due to input power or the like while travelling is further suppressed.

Since the crown 30 that contacts a road surface is formed of a rubber material having higher wear resistance than that of the resinous material forming a part or an entire of the tire case 17, the wear resistance of the tire 10 is improved.

Since the annular bead core 18 formed of a metal material is embedded in the bead portion 12, the tire case 17 is strongly fixed to the rim 20, i.e., the tire 10 is strongly fixed to the rim 20, similarly to conventional rubber pneumatic tires.

By providing a sealing layer 24, which is formed of a rubber material having higher sealing properties than those of the resinous material forming a part or an entire of the tire case 17, on a part of the bead portion 12 that contacts the rim 20, the fittability onto a rim between the tire 10 and the rim 20 can be further enhanced.

Although a configuration in which the reinforcing cord 26 is heated such that a portion that is on a surface of the tire case 17 and that contacts the heated reinforcing cord 26 is melted or softened is adopted in the embodiment described above, the invention is not limited to this configuration. For example, a hot air generating device may be used, instead of heating the reinforcing cord 26, to heat the outer circumferential surface of the crown portion 16 in which the reinforcing cord 26 is to be embedded, and the reinforcing cord 26 may thereafter be embedded in the crown portion 16.

Although the heat source of the cord heating device 59 includes the heater and the fan in Embodiment 1, the invention is not limited to this configuration, and a configuration in which the reinforcing cord 26 is directly heated by radiation heat (for example, infrared rays) may be adopted.

Although a configuration in which a region at which the resinous material with the reinforcing cord 26 embedded therein is melted or softened is forcibly cooled with the second roller 64 formed of metal is adopted in Embodiment 1, the invention is not limited to this configuration. For example, a configuration in which cold air is directly applied to the region at which the resinous material is melted or softened, to forcibly cool and solidify the region at which the resinous material is melted or softened may also be adopted.

Although a configuration in which the reinforcing cord 26 is heated is adopted in Embodiment 1, a configuration in which the outer circumference of the reinforcing cord 26 is coated with the same resinous material as that of the tire case 17, for example, may be adopted. In this case, by heating the coated resinous material along with the reinforcing cord 26 when the coated reinforcing cord is wound on the crown portion 16 of the tire case 17, incorporation of air can effectively be suppressed at the time of embedding the reinforcing cord in the crown portion 16.

While helically winding the reinforcing cord 26 is easy from the viewpoint of production, a method in which the reinforcing cord 26 is discontinuous in the width direction, for example may be alternatively contemplated.

The tire 10 of Embodiment 1 is a so-called tubeless tire, in which an air chamber is formed between the tire 10 and the rim 20 when the bead portion 12 is fitted onto the rim 20. However, the invention is not limited to this configuration, and the tire may have a complete tube form. Further, the tire of the invention may have a mode in which a reinforcing cord member is used, the cord member being covered with a resinous material, as shown in the second embodiment (Fig. 4 and Fig. 5) of JP-A No. 2012-046030.

Although modes for carrying out the invention are described above with reference to embodiments, the embodiments are merely examples, and may be practiced with various modifications within a range that does not depart from the gist of the invention. Of course, the protection scope of the invention is not limited to these embodiments.

### EXAMPLES

More specific explanation regarding the invention is given below based on Examples. However the invention is not limited thereto.

### Examples 1 to 8 and Comparative Examples 1 to 11

Resinous materials were respectively obtained by mixing components to form the composition listed in Tables 1 and 2. Each resinous material was pelletized and injection molded under a molding temperature of 230°C to obtain a sample piece. The measurements set forth below were performed by using samples punched from the sample piece.

### Tensile elastic modulus

Measurement of a tensile elastic modulus was performed in accordance with JIS K7113:1995.

### Creep

An amount of creep was measured three hours after starting of a test which accords with JIS K7115:1995 using a JIS No.3 dumbbell specimen under the conditions of 65 mm of a distance between both grips, 40 kN and 90°C.

### Evaluation

### Evaluation of Tire (Deformation resistance)

A tire with a tire size of 165/45 R16 was prepared and made to travel on a drum at 150 km/h. A tire which traveled for 5 minutes or more was evaluated as grade A, while a tire which exhibited a sidewall bulge or air leaking due to the sidewall bulge was evaluated as grade B.

### Evaluation of Tire (Fittability onto Rim)

Using the respective polymers obtained in Examples and Comparative Examples, tires were formed, with reference to Embodiment 1 described above (tire shown in Figs. 1A and 1B). Subsequently, the tire was fitted onto a rim. The tire which can be fitted onto a rim and in which air sealing property was assured is evaluated as "A", and the tire that cannot be fitted onto a rim with assuring air sealing property is evaluated as "B".

**TABLE 1**

| | | Comparative Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Isotactic PP | E105GM | 100 | 70 | 50 | 70 | 45 | 40 | 80 | 60 | 55 | | |
| | EA9 | | | | | | | | | | 100 | 55 |
| Atactic PP | H3002 | 0 | 30 | 50 | | | | | | | | |
| | T1712 | | | | 30 | 55 | 60 | | | | 0 | 45 |
| | X1102 | | | | | | | 20 | 40 | 45 | | |

| (Unit: parts by mass) | | | | | | | | | | | | |
|---|---|---|---|---|---|---|---|---|---|---|---|---|
| Pentad ratio | | 96 | 93.5 | 87.6 | 93.7 | 87.5 | 87 | 94.1 | 88.1 | 86.3 | 94.5 | 85.4 |
| Elastic modulus [MPa] | | 1637 | 702 | 245 | 809 | 247 | 201 | 655 | 286 | 186 | 1631 | 167 |
| Creep [mm] | | 0.7 | 3.8 | 88 | 1.6 | 47.4 | 86 | 2.6 | 78.5 | 48.3 | 0.5 | 89.3 |
| Deformation resistance | | A | A | B | A | B | B | A | B | B | A | B |
| Rim fitting property | | B | B | A | B | A | A | B | A | A | B | A |

**TABLE 2**

| | | Examples | | | | | | | |
|---|---|---|---|---|---|---|---|---|---|
| | | 1 | 2 | 3 | 4 | 5 | 6 | 7 | 8 |
| Isotactic PP | E105GM | 60 | 65 | 60 | 55 | 50 | 70 | | |
| | EA9 | | | | | | | 70 | 65 |
| Atactic PP | H3002 | 40 | | | | | | | |
| | T1712 | | 35 | 40 | 45 | 50 | | 30 | 35 |
| | X1102 | | | | | | 30 | | |

| (Unit: parts by mass) | | | | | | | | | |
|---|---|---|---|---|---|---|---|---|---|
| Pentad ratio | | 91.7 | 91.4 | 90.9 | 90.1 | 88.2 | 93.4 | 93.4 | 91.7 |
| Elastic modulus [MPa] | | 352 | 623 | 554 | 410 | 328 | 479 | 450 | 341 |
| Creep [mm] | | 28.7 | 1.9 | 2.7 | 3.8 | 29.1 | 4.9 | 2.9 | 4.4 |
| Deformation resistance | | A | A | A | A | A | A | A | A |
| Rim fitting property | | A | A | A | A | A | A | A | A |

Components shown in Tables 1 and 2 are as set forth below.
E-105GM: polypropylene, "PRIME POLYPRO" manufactured by Prime Polymer Co., Ltd.
EA9: polypropylene, "NOVATEC"(trade name) manufactured by Japan Polypropylene Corporation
H3002: polypropylene, "TAFTHREN"(trade name) manufactured by Sumitomo Chemical Co., Ltd.
T1712: polypropylene, "TAFTHREN"(trade name) manufactured by Sumitomo Chemical Co., Ltd.
X1102: polypropylene, "TAFTHREN"(trade name) manufactured by Sumitomo Chemical Co., Ltd.

From Tables 1 and 2, it is found that, Examples, in which at least polypropylene was contained in the resinous material forming the tire frame and the pentad ratio of the resinous material was controlled within a specific range, exhibited suppressed side swelling as compared with Comparative Examples, in which the condition of the pentad ratio is not satisfied. Examples were also found as having favorable fittability onto a rim, and as a result, leakage of air thereof was suppressed.

## Claims

1. A tire, comprising a circular tire frame comprising a resinous material, the resinous material comprising polypropylene and having a pentad ratio of from 88.2% to 93.4%.

2. The tire according to claim 1, wherein the resinous material comprises:
a first resin that is polypropylene; and
a second resin that is different from the first resin.

3. The tire according to claim 1 or claim 2, wherein the resinous material comprises isotactic polypropylene at a content of from 50% by mass to 70% by mass with respect to a mass of the resinous material.

4. The tire according to any one of claims 1 to 3, wherein the resinous material comprises atactic polypropylene at a content of from 30% by mass to 50% by mass with respect to a mass of the resinous material.

## Patentansprüche

1. Reifen, umfassend einen ringförmigen Reifenrahmen, umfassend ein harzartiges Material, wobei das harzartige Material Polypropylen umfasst und ein Pentadverhältnis von 88,2% bis 93,4% aufweist.

2. Reifen nach Anspruch 1, wobei das harzartige Material Folgendes umfasst:
ein erstes Harz, welches Polypropylen ist; und
ein zweites Harz, welches unterschiedlich vom ersten Harz ist.

3. Reifen nach Anspruch 1 oder Anpruch 2, wobei das harzartige Material ein isotaktisches Polypropylen, in einem Anteil von 50 Massen-% bis 70 Massen-%, in Bezug auf eine Masse des harzartigen Materials umfasst.

4. Reifen nach einem der Ansprüche 1 bis 3, wobei das harzartige Material ataktisches Polypropylen, in einem Anteil von 30 Massen-% bis 50 Massen-% in Bezug auf eine Masse des harzartigen Materials umfasst.

## Revendications

1. Bandage pneumatique comprenant une armature pneumatique circulaire comprenant un matériau résineux, le matériau résineux comprenant du polypropylène et ayant un rapport pentavalent allant de 88,2% à 93,4%.

2. Bandage pneumatique selon la revendication 1, dans lequel le matériau résineux comprend :
une première résine étant du polypropylène ; et
une seconde résine se distinguant de la première résine.

3. Bandage pneumatique selon la revendication 1 ou la revendication 2, dans lequel le matériau résineux comprend du polypropylène isotactique en une contenance allant de 50% en masse à 70% en masse par rapport à une masse du matériau résineux.

4. Bandage pneumatique selon l'une quelconque des revendications 1 à 3, dans lequel le matériau résineux comprend du polypropylène atactique en une contenance allant de 30% en masse à 50% en masse par rapport à une masse du matériau résineux.
